## Europäisches Patentamt
## European Patent Office
## Office européen des brevets

(11) Numéro de publication: **0 053 059 B1**

(12) **FASCICULE DE BREVET EUROPEEN**

(19)

(45) Date de publication du fascicule du brevet:
02.04.86

(51) Int. Cl.⁴: **G 01 L 1/22**, H 01 C 17/08,
H 01 C 17/12

(21) Numéro de dépôt: **81401768.7**

(22) Date de dépôt: **05.11.81**

(54) **Dispositif de mesure comprenant une jauge de contrainte avec un support en verre mince.**

(30) Priorité: **20.11.80 FR 8024656**

(43) Date de publication de la demande:
**02.06.82 Bulletin 82/22**

(45) Mention de la délivrance du brevet:
**02.04.86 Bulletin 86/14**

(84) Etats contractants désignés:
**BE DE FR GB IT NL**

(56) Documents cités:
**FR - A - 2 066 641**
**FR - A - 2 440 547**
**GB - A - 1 022 075**
**US - A - 3 803 706**
**US - A - 3 805 377**

(73) Titulaire: **COMMISSARIAT A L'ENERGIE ATOMIQUE
Etablissement de Caractère Scientifique Technique et
Industriel, 31/33, rue de la Fédération, F-75015 Paris (FR)**

(72) Inventeur: **Delapierre, Gilles, 216 Percevalière,
F-38170 Seyssinet (FR)**

(74) Mandataire: **Mongrédien, André et al, c/o
BREVATOME 25, rue de Ponthieu, F-75008 Paris (FR)**

ACTORUM AG

**Description**

La présente invention a trait à un dispositif de mesure comportant une jauge de contrainte.

Plus précisément elle a pour objet un dispositif permettant des mesures aussi précises que les meilleurs dispositifs de l'art antérieur, mais en étant beaucoup moins coûteux que ceux-ci. Cette invention trouve de nombreuses applications dans le domaine de la métrologie et notamment du pesage électronique.

Parmi les méthodes actuellement utilisées pour réaliser des jauges de contrainte, la plus connue consiste à utiliser un film mince de polyimide sur lequel on colle une feuille très mince (environ 5 µm) d'un matériau résistif, à base de nickel, de chrome et de cuivre par exemple. La couche résistive est ensuite gravée en fines bandes pour obtenir une résistance de valeur et de forme appropriées, puis la jauge est collée directement sur le corps d'épreuve.

Si de telles jauges permettent des mesures très précises (jusqu'à $10^{-4}$ de l'étendue de mesure) leur fabrication est très délicate. En effet, la manipulation et le collage de feuilles très minces n'est pas chose aisée et la fabrication même de feuilles de 5µm d'épaisseur est encore plus difficile. On comprend que le prix de revient de telles jauges soit très élevé et leur emploi dans des capteurs réalisés en grande série est difficilement envisageable.

Une autre méthode consiste à réaliser la jauge directement sur le corps d'épreuve par dépôt sous vide d'abord d'une couche isolante, puis d'une couche résistive. L'utilisation d'un isolant minéral de très faible épaisseur permet une bonne stabilité du capteur et de bonnes qualités métrologiques mais cette méthode présente elle aussi des inconvénients. La surface du corps d'épreuve sur laquelle est effectué le dépôt doit subir un pollissage très soigné afin d'éviter les trous dans l'isolant. D'autre part, le débit des machines utilisées s'exprimant en unités de surface par unité de temps, le prix des capteurs est proportionnel à la surface du corps d'épreuve sur laquelle ils sont placés et celle-ci est parfois assez grande pour des raisons de résistance mécanique. Enfin, en raison de la sensibilité des corps d'épreuve, tant aux produits chimiques qu'aux traitements thermiques, les procédés de fabrication peuvent être très compliqués, ce qui augmente considérablement leur coût.

Une troisième méthode utilise comme corps d'épreuve une plaque de silicium monocristallin dans laquelle on réalise les résistances par diffusion d'un dopant comme dans les circuits intégrés. Si cette méthode permet la production en grande série, la sensibilité du silicium aux changements de température ne permet pas d'obtenir actuellement des précisions meilleures que $10^{-2}$ de l'étendue de mesure.

Une autre procédé consiste à placer une couche résistive sur un support en verre mince lui-même fixé sur un corps d'épreuve. Par exemple, le document FR-A-2 066 641 décrit un dispositif se composant d'une lame flexible ayant une jauge de contrainte sur chacune de ses faces. Chaque jauge se compose d'une plaque sensible fixée sur une lame de verre mince qui est elle-même collée sur la lame flexible métallique. Cette disposition présente l'inconvénient suivant: étant donné qu'il y a une jauge sur chaque face du corps d'épreuve et que l'une de ces faces est sollicitée en traction, l'une au moins des lames de verre mince est elle-même sollicitée en traction. Or, le verre ayant une faible résistance à la traction, on est limité en sensibilité car le corps d'épreuve ne doit pas subir de déformations trop importantes. De plus, dans ce document, les lames de verre mince ont une épaisseur inférieure à 50µm ce qui en rend la manipulation délicate. Les documents US-A-3 803 706 et US-A-3 805 377 décrivent des dispositifs du même type, mais on retrouve toujours des jauges de contrainte sur les deux faces du corps d'épreuve et les lames de verre mince ont des épaisseurs du même ordre de grandeur. Ces dispositifs manquent donc de sensibilité et de précision et leur fabrication est délicate, ce qui la rend longue et coûteuse.

La présente invention a justement pour objet un dispositif qui remédie à ces inconvénients grâce à une jauge perfectionnée qui permet à la fois des mesures précises et une fabrication du dispositif en grande série et à faible coût.

Le dispositif objet de l'invention comporte, de manière connue, un corps d'épreuve pouvant se déformer sous l'action de la grandeur à mesurer, ledit corps d'épreuve comportant au moins une face sollicitée en compression sur laquelle est fixée au moins une jauge de contrainte comprenant une couche sensible aux déformations fixée sur un support en verre mince dit «pelliculaire».

Selon l'invention, la ou les jauge/s ne se trouve(nt) que sur la ou les face/s sollicitée/s en compression du corps d'épreuve et l'épaisseur du support en verre mince est comprise entre 100 et 250µm.

Selon un mode de réalisation préféré, l'épaisseur du support en verre est voisine de 150µm.

Les propriétés élastiques des lames de verre minces sont connues et l'idée de les utiliser comme corps d'épreuve, notamment pour les mesures de pression, n'est pas nouvelle. Cependant, on est limité aux cas où les déformations de celui-ci ne sont pas trop grandes car, lorsque le corps d'épreuve se déforme, une partie de celui-ci est sollicitée en traction et la limite à la rupture du verre est environ 8 fois plus faible en traction qu'en compression. Dans la présente invention, au contraire, la lame de verre mince ne sert que de support à la jauge et se trouve collée sur une face du corps d'épreuve qui est sollicitée en compression: c'est l'ensemble de la lame de verre mince qui se trouve sollicité en compression et on peut mesurer des contraintes avec une sensibilité huit fois plus importante.

L'invention apparaîtra mieux à la lecture de la description qui va suivre, donnée à titre purement illustratif et nullement limitatif en référence aux dessins annexés dans lesquels:

– la figure 1 est une vue schématique en coupe d'un mode de réalisation du dispositif selon l'invention et,

– la figure 2 est une vue de dessous agrandie et en perspective du dispositif de la fiqure 1 montrant la forme des jauges contraintes utilisées dans l'invention.

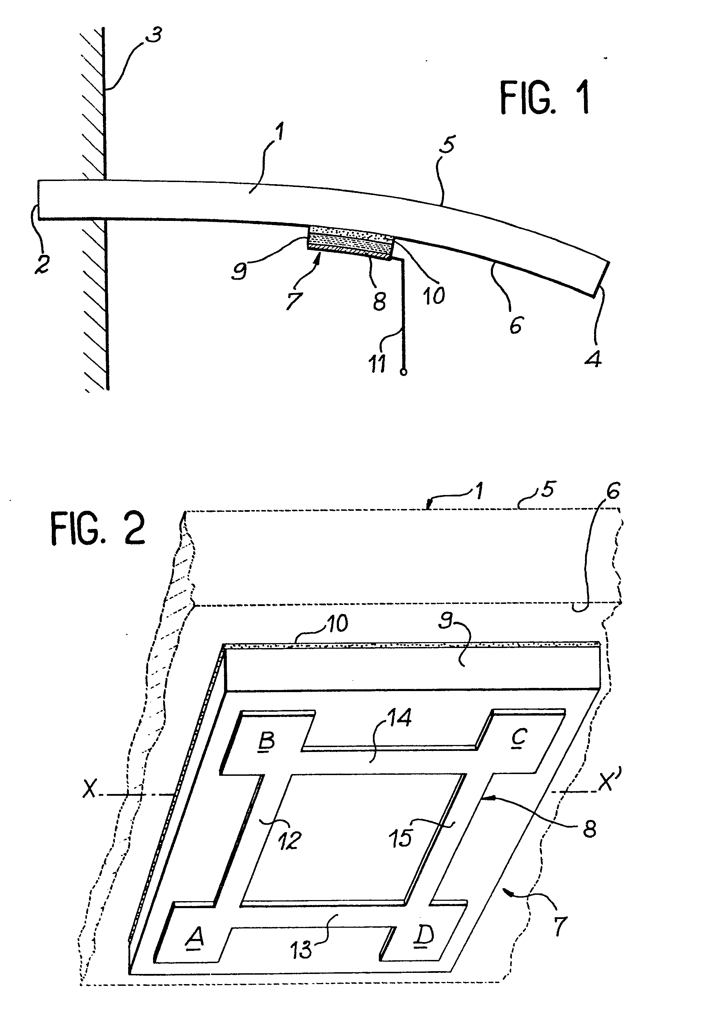

Sur la figure 1, on voit un corps d'épreuve 1, qui peut être par exemple une lame d'acier, dont une extrémité 2 est encastrée dans une paroi 3 tandis que l'autre extrémité 4 est libre. Sous l'action de la grandeur à mesurer (force par exemple), le corps 1 se déforme, l'une de ses faces 5 étant sollicitée en traction tandis que l'autre face 6 est sollicitée en compression. Sur la face 6 se trouve une jauge de contrainte 7 qui comprend une couche mince 8 sensible aux déformations: dans le cas présent, il s'agit d'une couche résistive déposée sur une lame de verre mince 9; la jauge 7 est collée sur le corps d'épreuve par l'intermédiaire d'une couche de scellement 10. Un jeu de fils de liaison 11 relie la jauge à un amplificateur (non représenté).

La jauge peut être réalisée par n'importe quel moyen connu, notamment par dépôt sous vide, par pulvérisation ou évaporation, d'un matériau résistif sur la lame de verre mince.

De très nombreux matériaux résistifs peuvent être utilisés, notamment des métaux ou alliages métalliques, par exemple à base de nickel-chrome, chrome-oxyde de silicium, platine, tantale etc... et la technique de dépôt sous vide permet de ne déposer qu'une couche très mince (entre 50 et 500 nm): on réalise ainsi une économie appréciable de métal et la résistance de la jauge est d'autant mieux définie, lors de la gravure des motifs, que la couche est plus mince.

L'utilisation d'une couche métallique très mince permet en outre d'obtenir une résistance élevée par unité de longueur, ce qui simplifie la réalisation de la jauge.

La forme d'une telle jauge apparait sur la vue en perspective de la figure 2. On voit que la couche résistive 8, déposée sur la lame de verre mince 9, se compose de quatre bandes métalliques identiques 12, 13, 14 et 15 disposées en carré et symétriquement par rapport à l'axe longitudinal XX' de la lame d'acier 1 qui constitue le corps d'épreuve. Les bandes 13 et 14 sont parallèles à l'axe du corps d'épreuve et les bandes 12 et 15 perpendiculaires. Aux sommets du carré se trouvent quatre contacts A, B, C et D. Les bandes métalliques 12, 13, 14 et 15 constituent les quatre résistances d'un pont de wheatstone alimenté entre A et C tandis que la tension de sortie est mesurée entre B et D. Les dimensions de cette jauge sont très faibles puisque l'ensemble du pont ainsi constitué représente un carré d'environ 5 mm de côté.

Lorsque le corps d'épreuve s'infléchit sous l'action de la grandeur à mesurer, c'est-à-dire lorsque son axe se déforme de sorte que la lame de verre mince 9 soit sollicitée en compression, les bandes 13 et 14 sont également sollicitées en compression: leur ésistance varie, ce qui entraîne un déséquilibre du pont de wheatstone proportionnel à la déformation du corps d'épreuve.

De plus, on a constaté expérimentalement que, de manière surprenante, les bandes 12 et 15 étaient légèrement sollicitées en traction, ce qui accentue le déséquilibre du pont et augmente la sensibilité de l'appareil.

L'utilisation de bandes métalliques très minces, par exemple d'une épaisseur de 150 nm, permet d'abaisser le prix de revient de l'apparail grâce à l'économie de métal ainsi réalisée et grâce à la forme très simple de la jauge. De plus, on notera que chaque élément résistif du pont, qu'il soit sollicité en traction ou en compression, est déformé en tous ses points dans le même sens, ce qui permet d'obtenir la sensibilité théorique maximale du capteur. Ceci représente un progrès important par rapport aux techniques de l'art antérieur où le dessin des résistances est tel que certaines parties sont déformées en sens inverse des autres.

Quant à l'épaisseur du support en verre mince, elle doit être suffisamment faible pour ne pas gêner la déformation du corps d'épreuve, mais pas trop cependant pour que l'on puisse manipuler la jauge sans trop de difficultés. Un bon compromis a été obtenu avec des verres d'épaisseur comprise entre 60 et 400µm et de préférence voisine de 150µm.

Le collage du support en verre mince sur le corps d'épreuve peut se faire par tout moyen connu: collage avec des colles rapides au méthyl-2-cyanoacrylate ou des époxydes à deux composants par utilisation d'un verre de scellement sérigraphiable ou par soudure. On peut aussi envisager la fixation à l'aide d'une couche de soudage fixée sur la face du support en verre mince opposée à la couche sensible et soudée au corps d'épreuve.

Le dispositif objet de l'invention présente de nombreux avantages et d'abord un prix de revient extrêmement bas. Celui-ci s'explique par le fait qu'une lame de verre mince constitue un substrat très économique (environ 0,01 francs par capteur), permettant une production automatisée en grande série par traitement collectif, et par le fait que le matériau résistif déposé en couche très mince par des techniques rapides et bien reproductibles, conduit à une faible consommation de métal. Le choix des matériaux résistifs est très vaste et la technique de dépôt sous vide permet une excellente liaison entre ce matériau et le verre. De plus, le support de la jauge est suffisamment rigide, ce qui facilite sa manipulation en vue du collage.

Enfin, le procédé de fabrication du dispositif est indépendant du corps d'épreuve utilisé.

Quant aux performances métrologiques d'un tel capteur, elles sont comparables à celles obtenues avec les meilleures jauges classiques à trame pelliculaire: précision de l'ordre de $10^{-3}$ à $10^{-4}$ de l'étendue de mesure et signal de mesure d'amplitude comparable.

Ce dernier point est très important car le signal des jauges classiques, déjà très faible, est responsable pour l'essentiel du prix des amplificateurs associés. Diminuer encore la sensibilité conduirait à des prix d'électronique incompatibles avec la plupart des applications.

Il va de soi que l'invention ne se limite pas au seul mode de réalisation qui vient d'être décrit et qu'on peut imaginer des variantes sans sortir pour autant du cadre de l'invention. Par exemple, on peut envisager de placer plusieurs jauges sur un même support ou utiliser plusieurs corps d'épreuve comportant chacun une ou plusieurs jauges.

En ce qui concerne la nature des couches sensibles, on peut envisager d'autres couches résistives telles que les couches très fines d'or (épaisseur inférieure à 5 mm) ou de bismuth, connues pour leur très grande sensibilité, mais aussi pour leur très grande instabilité. On peut aussi envisager des couches autres que résistives, par exemple des couches semiconductrices ou autres dans lesquelles on réaliserait des composants actifs du type transistor; ou des couches diélectriques à partir desquelles on constituerait des condensateurs; ou des couches en matériau magnéto-strictif à perméabilité fonction de la contrainte.

L'intérêt de l'utilisation d'un support de verre, selon l'invention, réside dans sa bonne compatibilité avec les techniques de fabrication de ces dispositifs.

## Revendications

1. Dispositif de mesure d'une grandeur variable, du genre de ceux qui comprennent un corps d'épreuve (1) pouvant se déformer sous l'action de la grandeur à mesurer, ledit corps d'épreuve (1) comportant au moins une face sollicitée en compression (6) sur laquelle est fixée au moins une jauge de contrainte (7) comprenant une couche (8) sensible aux déformations fixée sur un support en verre mince dit «pelliculaire» (9), caractérisé en ce que la ou les jauge/s ne se trouve/nt que sur la ou les face/s sollicitée/s en compression (6) du corps d'épreuve (1) et en ce que l'épaisseur du support en verre mince (9) est comprise entre 100 et 250μm.

2. Dispositif selon la revendication 1, caractérisé en ce que l'épaisseur du support en verre mince (9) et voisine de 150μm.

3. Dispositif selon l'une quelconque des revendications 1 et 2, caractérisé en ce que ladite couche sensible aux déformations est une couche résistive (8).

4. Dispositif selon la revendication 3, caractérisé en ce que la couche résisitve (8) est en métal ou alliage métallique et en ce que son épaisseur est comprise entre 50 et 500 nm.

5. Dispositif selon l'une quelconque des revendications 3 et 4, caractérisé en ce que ladite couche résistive (8) est déposée sous vide par pulvérisation ou évaporation.

6. Dispositif selon l'une quelconque des revendications 3 à 5, caractérisé en ce que la couche résistive (8) comprend quatre bandes métalliques identiques (12, 13, 14, 15) disposées de façon à former les quatre côtés d'un carré.

7. Dispositif selon l'une quelconque des revendications 1 à 6, caractérisé en ce que ledit support en verre mince (9) est fixé au corps d'épreuve (1) par l'intermédiaire d'une couche de scellement (10).

8. Dispositif selon l'une quelconque des revendications 1 à 6, caractérisé en ce qu'une couche de soudage est fixée sur la face du support en verre mince (9) opposée à la couche sensible (8) et en ce que cette couche de soudage est soudée au corps d'épreuve (1).

## Claims

1. Apparatus for measuring a variable quantity, of the type comprising a test body (1) adapted to be deformed under the action of the quantity to be measured, said test body (1) comprising at least one surface under compression (6) on which is fixed at least one strain gauge (7) comprising a deformation-sensitive layer (8) fixed on a support of thin glass or "film" (9), characterized in that the gauge or gauges are only located on a surface or surfaces under compression (6) of the test body (1), and in that the thin glass support (9) has a thickness between 100 and 250μm.

2. Apparatus according to claim 1, characterized in that the thin glass support (9) has a thickness of around 150μm.

3. Apparatus according to either of claims 1 and 2, characterized in that said deformation-sensitive layer is a resistive layer (8).

4. Apparatus according to claim 3, characterized in that the resistive layer (8) is formed from a metal or metal alloy, and in that its thickness is between 50 and 500 nm.

5. Apparatus according to either of claims 3 and 4, characterized in that said resistive layer (8) is deposited by vacuum-sputtering or evaporation.

6. Apparatus according to any one of claims 3 to 5, characterized in that the resistive layer (8) comprises four identical metal strips (12, 13, 14, 15) disposed to form the four sides of a square.

7. Apparatus according to any of claims 1 to 6, characterized in that said thin glass support (9) is fixed to the test body (1) through a sealing layer (10).

8. Apparatus according to any one of claims 1 to 6, characterized in that a layer of solder is fixed on the surface of the thin glass support (9) opposite the sensitive layer (8) and in that said layer of solder is soldered to the test body (1).

## Patentansprüche

1. Messvorrichtung für eine variable Grösse von der Art, die einen Prüfkörper (1) aufweist, der sich unter der Wirkung der zu messenden Grösse verformen kann, wobei der Prüfkörper (1) wenigstens eine druckbelastete Seite (6) aufweist, auf der wenigstens ein Dehnungsmessstreifen (7) befestigt ist, der eine verformungsempfindliche Schicht (8) umfasst, die auf einem dünnen, «Lamelle» genannten Glasträger (9) befestigt ist, dadurch gekennzeichnet, dass sich der oder die Dehnungsstreifen nur auf der oder den druckbeanspruchten Seite/n (6) des Prüfkörpers (1) befindet/n und dass die Dicke des dünnen Glasträgers (9) zwischen 100 und 250 µm liegt.

2. Vorrichtung nach Anspruch 1, dadurch gekennzeichnet, dass die Dicke des dünnen Glasträgers (9) nahe bei 150µm liegt.

3. Vorrichtung nach Anspruch 1 oder 2, dadurch gekennzeichnet, dass die verformungsempfindliche Schicht eine Widerstandsschicht (8) ist.

4. Vorrichtung nach Anspruch 3, dadurch gekennzeichnet, dass die Widerstandsschicht (8) aus Metall oder Metallegierung ist und dass ihre Dicke zwischen 50 und 500 nm liegt.

5. Vorrichtung nach Anspruch 3 oder 4, dadurch gekennzeichnet, dass die Widerstandsschicht (8) durch Zerstäubung oder Aufdampfen im Vakuum aufgebracht ist.

6. Vorrichtung nach einem der Ansprüche 3 bis 5, dadurch gekennzeichnet, dass die Widerstandsschicht (8) vier identische Metallbänder (12, 13, 14, 15) umfasst, die unter Bildung der vier Seiten eines Quadrates angeordnet sind.

7. Vorrichtung nach einem der Ansprüche 1 bis 6, dadurch gekennzeichnet, dass der dünne Glasträger (9) an dem Prüfkörper (1) durch Verschmelzung (10) befestigt ist.

8. Vorrichtung nach einem der Ansprüche 1 bis 6, dadurch gekennzeichnet, dass eine Lötschicht auf der der empfindlichen Schicht (8) gegenüberliegenden Seite des dünnen Glasträgers angebracht ist und dass diese Lötschicht an dem Prüfkörper (1) angelötet ist.

# FIG. 1

# FIG. 2